# EUROPEAN PATENT SPECIFICATION

(11) **EP 2 867 586 B1**
(45) Date of publication and mention of the grant of the patent: **26.09.2018**
(21) Application number: 13794156.3
(22) Date of filing: 21.05.2013
(51) Int. Cl.: F24D 11/02, F24D 17/02, F24H 4/04, F25B 27/00, F25B 30/02

(54) **HEATING ARRANGEMENT FOR HEATING A FLUID UTILIZING A SOLAR PANEL**
HEIZANORDNUNG ZUM ERWÄRMEN EINES FLUIDS UNTER VERWENDUNG EINES SOLARPANEELS
AGENCEMENT DE CHAUFFAGE PERMETTANT DE CHAUFFER UN FLUIDE GRÂCE À UN PANNEAU SOLAIRE

(30) Priority: 21.05.2012 SE 1250511
(43) Date of publication of application: 06.05.2015
(73) Proprietor: Soletaer AB, S-671 23 Arvika (SE)
(72) Inventor: FJAESTAD, Adam, S-671 92 Arvika (SE)
(74) Representative: Johansson, Lars E.
(86) International application number: PCT/SE2013/050578
(87) International publication number: WO 2013/176611

(56) References cited:
- WO-A2-2009/043334
- WO-A2-2009/043334
- WO-A2-2009/130294
- AT-B- 412 911
- AT-B- 412 911
- CN-Y- 201 121 940
- KR-B1- 101 084 569
- US-A- 3 250 269
- US-A- 4 227 515

## Description

### TECHNICAL FIELD

The present invention relates to a heating arrangement for heating a fluid, comprising a first heat exchanger loop, arranged to act on a fluid to be heated, and a second heat exchanger loop, arranged to also act on said fluid to be heated.

### BACKGROUND ART

Many kinds of heating arrangements are known within the area of heating a fluid such as water for a building. In a house, the water used as tap water needs to be heated to a suitable temperature and maintained in a tank for use when desired, and to provide such heated water by conventional methods is generally costly.

To reduce costs, renewable energy sources such as solar panels can be used, but in colder climates it is generally difficult to achieve the power needed to heat tap water all year round, due to the size of solar panels required and the costs associated therewith. During bright summer months, however, the solar panels necessary in winter would not be needed, giving redundancies in the heating system and excessive energy for heating the water. As a consequence, fluids in the solar panels can be brought to boil, causing damages and creating the risk for freezing damages in winter.

Some systems to address these problems are known, but are mostly too expensive and bulky to be used by consumers living in smaller houses, e.g. as known from AT412911 and/or WO2009043334. In many houses, an air to air heat pump is mounted to heat indoor air, but installing an air to water heat pump to also heat the tap water and/or water for radiators and the like is more costly and therefore-not frequently occuring. Also, for houses with heating systems already in place, the remodelling of the heating systems to more efficient systems is in itself costly and therefore not beneficial for consumers in general.

Another problem facing users of such heating arrangements is the need for defrosting in colder climates, to avoid an unacceptable loss of efficiency due to the formation of an ice coating on parts of the arrangement. Defrosting generally requires a lot of energy and also prevents the arrangement from being used for heating water during defrosting operation, resulting in further losses.

There is therefore a need for a convenient and cost efficient heating arrangement suitable for heating tap water in houses that combine the advantages of renewable energy sources and the reliability of more conventional energy sources, without adding unduly to the cost of installing and maintaining such an arrangement.

### DISCLOSURE OF THE INVENTION

The object of the present invention is to eliminate or at least to minimize the problems described above. This is achieved by a heating arrangement according to the appended claim 1 with a panel serving as a solar collector for said second heat exchanger loop. Thereby, the fluid to be heated, preferably tap water, can be heated continuously when the sun is shining against the panel and the first heat exchanger loop is arranged to contribute to the heating of said fluid at times when the sunlight is insufficient to heat the fluid to the desired temperature.

According to the invention, said panel is arranged to drive the second heat exchanger loop. Thereby, the second heat exchanger loop can operate continuously when the sun is shining, without requiring control by a controlling unit or the like, and only the first heat exchanger loop needs to be controlled to contribute to the heating of the fluid when needed.

It is beneficial to mount said panel on the heating arrangement near an air inlet so that it can serve as a moisture trap for air humidity. Thereby, the double advantage of preventing condensation on components in the heating arrangement at a further distance from the air inlet, and of having the panel receive the energy released during condensation can be achieved.

Preferably, the heating arrangement further comprises an evaporator connected to the first heat exchanger loop that is arranged so that at least a part of said panel is placed between the evaporator and the air inlet. Thereby, a condensation on the evaporation can largely be prevented, as mentioned above, and the benefits of having air from the air inlet flowing through the evaporator can still be achieved. Thus, the evaporator serves to heat a refrigerant inside the first heat exchanger loop.

It is advantageous for the heating arrangement to comprise a heat exchanger tubing arranged so that said fluid to be heated, i.e. a tap water, can flow through said tubing while the tubing at the same time houses at least a part of both said first heat exchanger loop and said second heat exchanger loop. Thereby, both heat exchanger loops can act on the fluid to be heated and the heat transfer between each of the heat exchanger loops and the fluid to be heated can be facilitated.

Preferably, a transparent outer wall is mounted on the heating arrangement in such a way that an air inlet flow gap is created between said transparent outer wall and the panel. Thereby, a quantity of air is constantly present between the wall and the panel and can be heated by sunlight falling through the transparent outer wall and onto the panel. Through this warming of the air, a defrosting operation of the panel and the evaporator can be achieved, making any ice formed melt and slide from the panel and evaporator. Preferably, the air inlet is at a lower end of said air inlet flow gap, giving the added advantages that the heated air remains in the air inlet flow gap, being prevented from escape by the fact that colder air outside the heating arrangement is present at the air inlet and that the ice being melted can slide downwards, out of the heating arrangement, without requiring specific removal.

It is advantageous for the heating arrangement to comprise a fan for circulating air in said heating arrangement. Thereby, a constant flow of air through the evaporator can be created, acting to heat a refrigerant in said first heat exchanger loop and to circulate air for faster defrosting, in the case of the air around the heating arrangement being at a temperature above zero degrees Celsius.

Preferably, the heating arrangement also comprises a control unit for controlling the various aspects of the arrangement, in particular the operation of the first heat exchanger loop.

More advantages of the invention will be readily understood by the person skilled in the art in view of the detailed description below.

### BRIEF DESCRIPTION OF THE FIGURES

In the following the invention will be described more in detail with reference to the enclosed figures where;
- Fig.1: shows a schematic front view of an arrangement according to the invention,
- Fig.2: shows a cross-sectional view along line B-B in Fig.1,
- Fig.3: shows a cross-sectional view along line A-A in Fig.1,
- Fig.4: shows a view from above of an arrangement according to the invention being attached to the wall of a house,
- Fig.5: shows a vertical cross-section along line C-C in Fig.4,
- Fig.6: shows a schematic view of a part of a building having an arrangement according to the invention attached thereto, and
- Fig. 7: shows a schematic side view of the first and second heat exchange loops in a cross-sectional side view of the heating arrangement, together with the fluid to be heated.

### DETAILED DESCRIPTION

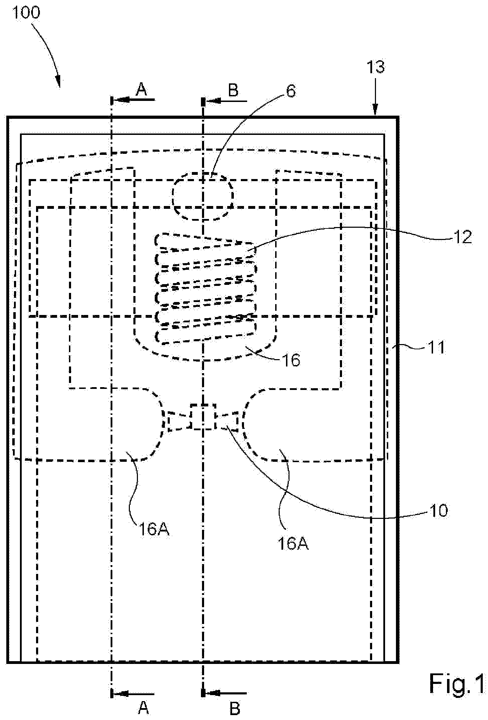

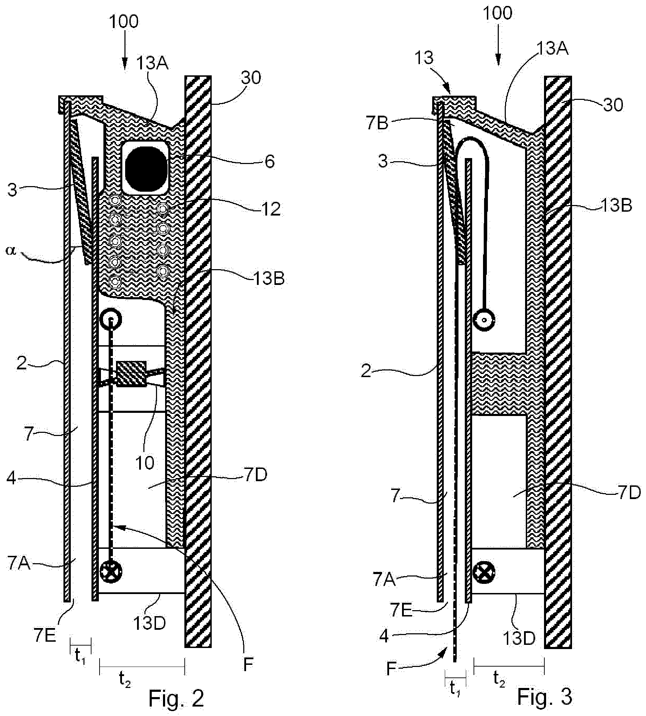

In Figs.1, 2 and 3 there is schematically presented an arrangement 100 in accordance with the preferred embodiment according to the invention. At a front side of the arrangement 100 is a transparent outer wall 2 and at a distance t₁ inside of the transparent outer wall 2 there is positioned a panel 4, preferably in the form of a metal wall 4. Between the wall 2 and panel 4 there is formed an inlet airflow gap 7 for a flow of air F. The transparent outer wall 2 is at its top connected to an outer casing 13, having a top wall 13A, a back wall 13B, sidewalls 13C and a bottom 13D. The back wall 13B is arranged at a distance t₂ (that is larger than ti) away from panel 4, forming a down flow compartment 7D and larger space than the inlet airflow gap 7. The bottom 13D extends horizontally between the back wall 13B and the panel 4 but not between the panel 4 and transparent outer wall 2, thereby creating a downwards facing open gap 7A between said transparent outer wall 2 and the panel 4. The panel 4 extends upwards from the bottom 13D but does not reach the top wall 13A, thereby forming an open gap 7B between an upper edge of the panel 4 and the top wall 13A of the outer casing 13.

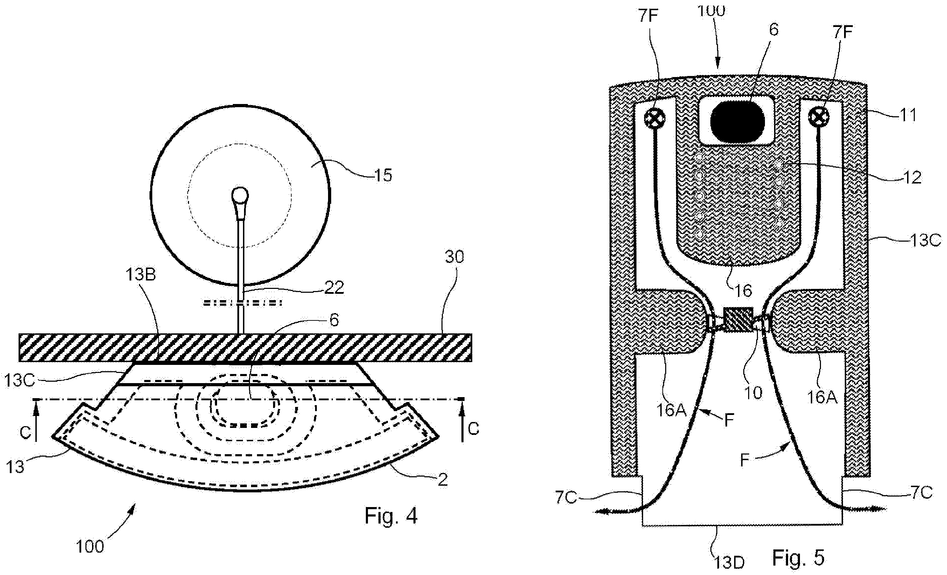

Further, as shown in Fig.5, there are arranged outlet holes 7C at corner sections in a lowermost portion of the outer casing 13, allowing air F to pass above the edge of the panel 4 and thereafter downwards between the panel 4 and the back wall 13B of the outer casing 13 and finally out through the openings 7C in the corner areas between the side walls 13C and the bottom 13D. A fan 10 is positioned in the space between the rear wall 13B and the panel 4.

The arrangement includes a first heat exchange loop 5 and a second heat exchanger loop 8 that are arranged to heat a fluid, such as tap water. The first heat exchanger loop 5 is of a conventional kind with a tubing containing a refrigerant such as R134a (tetrafluorethane, CH₂FCF₃) or R744 (carbon dioxide, CO₂), said tubing forming a closed loop inside the heating arrangement 100. It is especially advantageous to use CO₂ as the refrigerant, thanks to its suitable thermodynamic properties. Other suitable refrigerants are R-600a (isobutane, C₄H₁₀) and propane (C₃H₈). Thanks to the placement of the heating arrangement outside a building, the risk for an explosion or fire in the case of leakage of a refrigerant from the heating arrangement can be largely eliminated.

In the downflow compartment 7D, a low pressure part 5B of the first heat exchanger loop leads from an expansion valve 9 to a heat absorbing part 5C of the tubing that is mounted in a zig-zag shape on the panel 4 in such a way that the refrigerant inside the tubing can be heated by the panel 4 if the panel 4 has a higher temperature than said refrigerant. Preferably, the boiling point of the refrigerant used is low enough to be heated when in contact with the panel 4 even during cold winter days, so that a heating will take place even if the temperature is around -15 to -20°C. Thus, said panel 4 is arranged to drive said second heat exchanger loop 8 by receiving sunlight and heating at least a part of said second heat exchanger loop 8.

From the heat absorbing part 5C of the first heat exchanger loop 5, the tubing leads to an evaporation part 5D in an evaporator 3 that is mounted at an upper end of the air inlet flow gap 7 between the panel 4 and the outer wall 2.

The evaporator 3 has a length extension that substantially exceeds the width ti in the air inlet flow gap 7 and is preferably fitted within the gap 7 at a sharp angle α in relation to the transparent wall 2 and the panel 4. Further, the evaporator 3 is of a rectangular shape with corners that are beveled to create a larger area of contact between the evaporator 3 and the transparent wall 2 and panel 4, respectively. The evaporator is of a flange type, having through channels that are perpendicularly directed in relation to the vertical extension of the evaporator 3. Thanks to this positioning, the risk for clogging of airways of the evaporator due to frost is minimized and the distribution of the air flowing through the evaporator 3 is optimized. Also, the open gap 7 is provided with two openings in the form of through holes 7F that further serve to distribute the air flowing in the gap 7 so that an even distribution in the evaporator 3 is achieved. In the low pressure part 5B, the refrigerant is in the form of a fluid, but starts to be heated and to boil in the heat absorbing part 5C.

Thus, the evaporator serves to further heat the refrigerant inside the evaporation part 5D. At this stage, the refrigerant has been completely transformed from a fluid to a gas. From the evaporator 3, the first heat exchanging loop 5 leads to a compressor 6, where the gas of the refrigerant is pressurized to further increase its temperature, forming a pressurized part 5A. The pressurized part 5A is now lead into a spirally arranged heat exchange tubing 12, where the fluid to be heated is allowed to flow in the heat exchange tubing 12 around said pressurized part 5A to form a counter-flow heat exchanger. After passing through the heat exchange tubing 12, the pressurized part 5A is lead to the expansion valve 9 that serves to lower the pressure and allow the refrigerant to condense and pass into the low pressure part 5B and continue the loop as described above. It is advantageous for the heat exchange tubing 12 to be a PEX tubing (made from crosslinked polyethylene) that can sustain a high pressure and be elastically deformed if the fluid to be heated should freeze inside the heating arrangement. The heat exchange tubing 12 can expand to accommodate a larger volume of ice and shrink to its regular size upon melting, without causing damages to the heating arrangement. Other materials with these properties are also suitable for use in the heat exchange tubing 12.

The compressor preferably has a relatively small capacity, i.e. in the range of 500-800W. Thanks to this arrangement, extra environmental advantages such as less material consumption upon manufacture and smaller energy requirements during operation, among others, may be gained and also advantages from a cost perspective may be gained due to the fact that compressors in this size are produced in large series, e.g. to be used in refrigerators.

The second heat exchanger loop 8 is preferably a solar collector loop using the panel 4 as a solar panel to heat a refrigerant. In some embodiments, it is suitable to use the same refrigerant in the second heat exchanger loop 8 as in the first heat exchanger loop 5, but different refrigerants can also be used.

The second heat exchanger loop 8 is preferably a thermosiphon using the panel 4 as a driver and having a heat absorbing portion 8A mounted on the panel 4, preferably on a rear side of said panel 4 facing away from the gap 7. The refrigerant inside the tubing of the second heat exchanging loop 8 is thus heated and brought to boil and transition to a gas phase if the panel 4 is of a temperature higher than the boiling point of the refrigerant. The gas is transported to a heat supplying part 8B in the form of a spiral within the heat exchanging tubing 12, mounted adjacent to the pressurized part 5A of the first heat exchanger loop 5 so that the fluid to be heated can flow around the heat supplying part and a counter-flow heat exchanger is thus created.

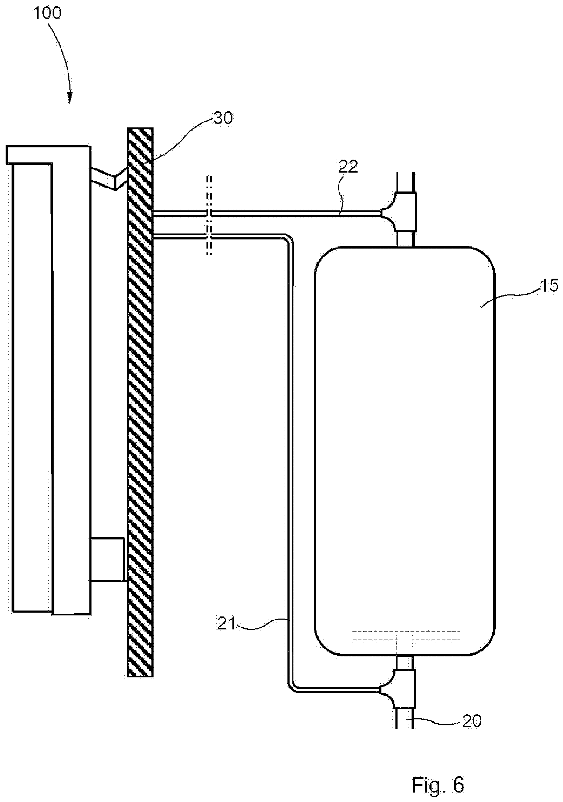

The heat exchange tubing 12 is enclosed within an isolating enclosure 11, 16. The heat exchange tubing 12 has a relatively large diameter, e.g. in the range of 20-50 mm, enabling the heat supplying portion 8B and pressurized part 5A of the loops 5, 8 to be housed therein without occupying a major space, i.e. also providing a surrounding space. The surrounding space within the heat exchange tubing 12 is intended for heating of tap water used in the house, e.g. in a heat water tank 15 (as will be explained more in detail in relation to Fig.6).

Fig.4 shows how the arrangement 100 preferably is designed. Accordingly, the transparent outer wall 2 and also the panel 4 are curved, preferably to have a common center of their radius, whereby the gap 7 formed between them will be the same in any vertical cross section going through the center line. Further it is shown that the side walls 13C of the outer casing are angled to converge in a direction towards the back wall 13B. Moreover, insulation 11, 16, 16A is applied at different parts within the arrangement 100. As already mentioned, the casing 13 has a layer of insulation 11, 16 Also, the back wall 13B has a layer of insulation applied thereto to cover said back wall 13B. Further, the inner side of the top wall 13A has insulation 16 as well as the upper inner sides of the side walls 13C. Finally there is an isolating partitioning 16A that at its center has a through passage 18 for the fan 10.

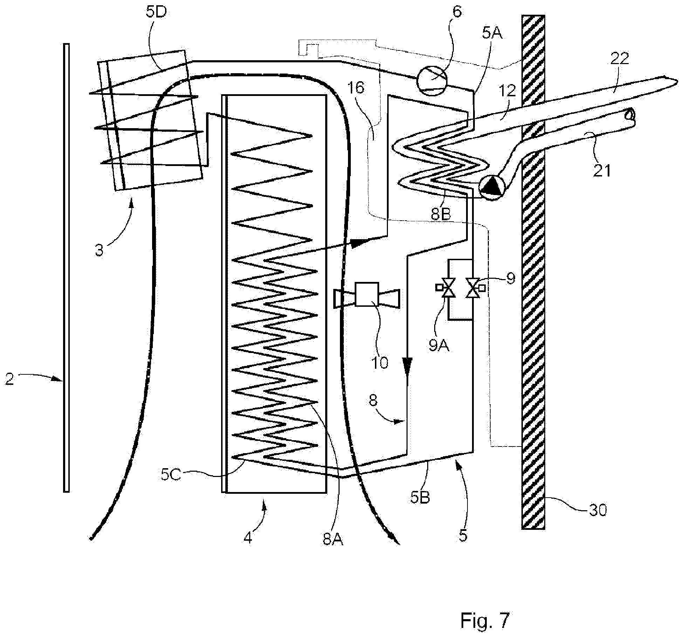

Fig. 7 discloses schematically the flow of the first and second heat exchanger loops 5, 8, showing the tubing 12 containing the fluid to be heated that is transported through a wall 30 of the building to reach the heating arrangement 100 and return into the building after heating. The first heat exchanger loop 5 comprises the expansion valve 9, the zig-zag formation 50 mounted on the panel 4, the segment 5D mounted on the evaporator 3 and the compressor 6; and the second heat exchanger loop 8 comprises a thermosiphon 8A, 8B with a segment 8A mounted on the panel 4 and continuing towards the tubing 12 where the fluid is heated, as is also described in more detail above.

The arrangement according to the invention provides a novel concept where the advantages of a solar collector are combined with the advantages of an air heat pump, in a very efficient manner, wherein the solar collector is the driver of the second heat exchanger loop 8 (thermosiphon loop) and the air heat pump is the driver of the first heat exchanger loop 5 (conventional heat exchanger loop). A major advantage of the arrangement according to the invention is the use of a relatively cheap heat absorbing unit, i.e. panel 4, to be used for heat collection for both of the loops 5, 8. Preferably, the panel 4 is made from a metallic material such as aluminium or copper or a combination thereof, but any material that can absorb heat and transfer it to the heat exchanger loops 5, 8 is suitable for use with the invention.

An exemplary embodiment, wherein the arrangement according to the invention is used to heat tap water, in a house, could be arranged as follows: A hot water tank 15 is assumed to be set for a max temperature of 60° and the fresh water supplied to the house may be assumed to have a temperature of 10°C. A minor loop of fresh cold water of 10°C is diverted from the supply pipe 20 (to the heat water tank 15), by means of a T-coupling enabling a substantially smaller flow of water in a supply line 21 to the heat tubing 12 for tap water. The cold water supplied to the heat tubing 12 will flow in a counter flow in relation to the two loops 5A, 8B and absorb heat from these loops, wherein the flow is controlled to provide for a temperature of 60°C when the heated water exits the heat tubing 12, into a return line 22. Thanks to the sporadic use of heated water in a normal house, a relatively low flow of heated water may be sufficient to keep a desired temperature within the heat water tank 15. On the other hand, the existing heating system for the heat water tank may of course be used in combination with the invention, if temporarily extra high use of heated water is desired.

During a hot summer day, the second heat exchanger loop 8 can be sufficient to heat the water of the tank 15 to a suitable temperature for use within a building, but in most cases the first heat exchanger loop 5 is also required to achieve the desired temperatures. The heating arrangement is preferably part of a heating system and operated by a control unit, using at least one sensor to collect data regarding the temperature at predetermined levels in the water tank 15, the air temperature near the heating arrangement, and other relevant data for the operation of the heating arrangement. By monitoring the temperature in the water tank 15, it can be determined when the first heat exchanger loop 5 needs to be operated, and a user of the system can decide what temperature is suitable for the water in the water tank 15. It is advantageous to keep the flow of fluid to be heated low, for instance at 7-10 litres per hour, to allow for sufficient heating by the first and second heat exchanger loops 5, 8 and to create a gradient inside the tank 15.

It is advantageous to allow a user of the heat arrangement 100 and water tank 15, i.e. an inhabitant of the building, to select the desired temperature in the tank 15.

Three different operation modes will now be described, to further exemplify the operation of the heating arrangement according to the invention.

In a first operating mode, it is assumed that the outdoor temperature is at -10°C. This will also be the temperature of the air flowing into the air inlet 7E and upwards through the air inlet flow gap 7. In the evaporator 3, the air will pass through in cross flow manner in relation to the refrigerant in the loop 5. Thereby, the refrigerant will have its temperature increased from about -20°C to approximately -15°C. The refrigerant will then be compressed by the compressor 6 implying a temperature increase to about 70°C. In the heat tubing 12, the compressed refrigerant will have its temperature lowered to about 30°C after acting to warm the fluid inside the tubing 12, and afterwards reaches the expansion valve 9, whereby the temperature will drop to about -20°C. Thereafter, it will absorb some heat from the panel 4 prior to again entering into the evaporator 3. The air leaving the heat arrangement through the outlet holes 7C has a temperature of about -12°C.

The termosiphon 8 will supply heat to the heat tubing 12 by absorbing solar energy from the panel 4 and deliver it at a temperature of about 70° in its tubing running in parallel with the other loop 5B within the heat tubing 12. It is to be noted that when the sun is shining there may not be any need to run the air heat pump, i.e. the compressor 6 may be inactive. Likewise it is possible to increase the heat energy taken from the air heat pump (e.g. when there is no sunshine) by means of increasing the air flow by activation of the fan 10. In a preferred embodiment, the fan 10 is variably driven allowing for stepless control of the air flow.

It is advantageous that the rotational speed of the fan 10 can be varied, depending on how loud noises from the fan 10 are allowable at a given time. When the air surrounding the heating arrangement 100 is warmer than 10°C, for instance, it may be more likely that persons are present in a vicinity of the heating arrangement 100 to enjoy nice weather. At such times, the fan 10 can be driven at a lower rotational speed so that a lower noise is produced. Conversely, when the air is cold, the fan can be used at a higher rotational speed that gives a higher level of noise. The placement of the fan 10 inside the heating arrangement 10 near insulation 11, 16 also allows for a damping of the noise by allowing the insulation to absorb the noise.

The positioning of the compressor 6 at the top of the housing 2, 13 provides the advantage that it will be located in the hottest part of the arrangement, bringing about advantages related to the runability and reliability of the compressor 6. Thanks to the placement of the compressor 6, no additional heating to prevent the compressor 6 from getting colder than other components is required. If the temperature gets lower than other components, the risk would arise that refrigerant would condense inside the compressor, causing said refrigerant to be mixed with oil from the compressor 6 during use and allowing said oil to spread through the first heat exchanger loop 5. But thanks to the advantageous placement of the compressor 6, this scenario can be avoided without the use of any additional components.

In order to optimize the flow through the evaporator 3, the isolating enclosure 11, 16 should preferably be positioning at the center, high up, in the downflow channel 7D of the arrangement 100, since such a positioning will promote a higher flow in the inlet channel 7A near the edges, thereby providing an ultimate distribution of the flow through the evaporator 3, since normally a much higher through flow is obtained in the center area through an air heat exchanger 3. A further advantage according to the concept, related to the air flow, is that fan 10 is positioned downstream of the evaporator 3, since a sucking fan provides a more even through flow than a pushing fan.

In a second operation mode, the outdoor temperature is at ±0°C. The refrigerant in the first heat exchanger loop is at a temperature of about -10°C before entering the evaporator 3 and about -5° before compression. The air leaving the heating arrangement 100 through the outlet holes 7C is at a temperature of about -2°C.

In a third operation mode, the outdoor temperature is at 20°C. The refrigerant in the first heat exchanger loop is at a temperature of about +10°C before entering the evaporator 3 and about +15° before compression. The air leaving the heating arrangement 100 through the outlet holes 7C is at a temperature of about 18°C.

The moisture content in the air flowing into the air inlet 7E varies with the temperature. Inside the air inlet flow gap 7, a condensation may occur, giving a coat of moisture to any surfaces adjacent to the air flow. In some cases, the moisture may freeze to form a coat of ice. This will occur in the first operation mode and in the second operation mode described above. The presence of an ice coating will in most cases severely lower the performance of the heating arrangement 100, giving rise to the need for defrosting at regular intervals. In conventional heating arrangements, it is common practice to schedule a defrosting operation at given intervals, but this is, as has also been mentioned above, energy consuming.

Thanks to the arrangement according to the invention, defrosting has been significantly simplified and can be performed at a fraction of the cost in a regular heating arrangement. Firstly, thanks to the operation of the second heat exchanger loop 8, the need for air circulation in the heating arrangement 100 is lowered at times when the sun is shining since this second loop 8 does not require air circulation to function. Secondly, thanks to the placing of the panel 4, most of the moisture entering the air inlet 7E will become attached to the panel 4, being the first surface encountered by the air that is colder than the air itself. Thus, ice formation on the evaporator 3 can largely be prevented. Thirdly, thanks to the width ti of the gap between the wall 2 and the panel 4, the ice layer forming on the panel 4 can be relatively thick without disturbing the flow of air through the air inlet flow gap 7, thus also lowering the frequency of defrosting required. Thanks to these advantages of the invention, the need for defrosting can be lowered from about once per hour (as required by some conventional heating arrangements) to once every few days.

When an ice layer has formed on the panel 4 and the evaporator 3, a number of efficient ways are presented, thanks to the invention, for removing said ice. Firstly, when the sun is shining, the air trapped between the transparent wall 2 and the panel 4 is heated, increasing the temperature in the air inlet flow gap 7. This is in many cases sufficient to start a thawing at the evaporator 3 and the panel 4, melting the ice and allowing it to fall off or drip down through the air inlet 7E. When the sunshine heats the panel 4, the layer closest to said panel 4 will be melted, resulting in the entire ice coating falling off.

Secondly, if the temperature of the surrounding air is above zero, simply starting the fan 10 and allowing air to circulate through the heating arrangement will result in a melting of the ice regardless of whether the sun shines.

Thirdly, the first heat exchanger loop 5 can be used in a thawing operation by opening a second valve 9A, placed in parallel to the expansion valve 9, that allows the refrigerant in the first heat exchanger loop 5 to circulate without being expanded to a lower pressure. Thereby, the temperature of the refrigerant will be at about 30°C as described above in relation to the first operation mode, and this in itself will be enough to heat the panel 4 and the evaporator 3 and allow the ice to melt and fall off.

Thus, ice removal can be performed in a simple and convenient manner, and need not be performed nearly as often as in conventional heating arrangements of this type. This is a significant advantage of the present invention.

In an alternative embodiment of the invention, it is possible to mount a plurality of panels 4 and transparent walls 2 to form a semicircle on a wall of a house, making it possible to catch sunlight from more angles and giving a more efficient warming of the panels 4. In some embodiments, it may be advantageous to use a plurality of second heat exchanger loops 8 for this purpose.

It is also possible to create a separate unit of the heating arrangements to be mounted at a distance from a wall of a building, for instance in a garden near a building. The water tank 15 could in this embodiment be connected through pipes in the ground or be placed inside the separate unit described above. In this case, the tap water is transported to the building.

Thanks to the invention, the heating of the fluid from the tank 15 can continue even if a freezing of one of the first and second heat exchanger loops 5, 8 should occur, simply by running the other of said loops 5, 8 alone. Even if both loops 5, 8 were to freeze, the heating of the fluid could continue at the water tank by using a standard heating device.

The invention is not to be seen as limited by the preferred embodiment described above, but can be varied within the scope of the claims, as will be readily apparent to the person skilled in the art. For instance, the heating portions of the loops can be separated to act on the fluid to be heated at separate locations within the heating arrangement, rather than at the same time inside the tubing. Also, another heat exchanger can be used instead of the PEX tubing, such as a tank, for instance, to allow the first and second heat exchanger loops to act on the fluid to be heated. The configuration of the tank 15 can also be varied and it could alternatively be integrated into the heating arrangement outside the building. The evaporator can also be of a different type than the flange type described above.

## Claims

1. Heating arrangement for heating a fluid, comprising a first heat exchanger loop (5) for receiving heat from ambient air, said first heat exchanger loop (5) being arranged to act on said fluid to be heated, and a second heat exchanger loop (8), arranged to also act on said fluid to be heated, said second heat exchanger loop (8) including tubing (8A, 8B) having a heat absorbing portion (8A) and a heat supplying portion (8B), the heat absorbing portion (8A) being connected to a panel (4) that serves as a solar collector and is arranged to heat said heat absorbing portion (8A), **characterized in that** said panel (4) is arranged to drive said second heat exchanger loop (8) by heating and evaporating a refrigerant inside of said heat absorbing portion (8A).

2. Heating arrangement according to claim 1, wherein said panel (4) is arranged near an air inlet (7E) to serve as a moisture trap for air humidity.

3. Heating arrangement according to claim 1 or 2, wherein said panel (4) is also connected to said first heat exchanger loop (5) and arranged to heat said first heat exchanger loop (5).

4. Heating arrangement according to claim 2, further comprising an evaporator (3) connected to said first heat exchanger loop (5), said evaporator (3) being arranged so that at least a part of said panel (4) is placed between said evaporator (3) and said air inlet (7E).

5. Heating arrangement according to any of the claims 1-4, further comprising a heat exchanger tubing (12) arranged so that said fluid to be heated can flow through said tubing (12), wherein said heat exchanger tubing (12) further houses at least a part of said first heat exchanger loop (5) and said second heat exchanger loop (8).

6. Heating arrangement according to any of the claims 1-5, further comprising a transparent outer wall (2) arranged so that an air inlet flow gap (7) is formed between said transparent outer wall (2) and said panel (4).

7. Heating arrangement according to claim 2 and 6, wherein said air inlet (7E) is located at a lower end of said air inlet flow gap (7).

8. Heating arrangement according to claim 7, wherein said air inlet flow gap (7) is further arranged to act as a defroster by holding a quantity of air to be heated by sunlight against said panel (4).

9. Heating arrangement according to any of the previous claims, wherein said panel (4) is further arranged to act as a defroster by receiving sunlight to melt any ice formed on a surface of said panel (4).

10. Heating arrangement according to any of the previous claims, further comprising a fan (10) for circulating air in said heating arrangement.

11. Heating arrangement according to any of the previous claims, further comprising a control unit.

12. Heating system comprising a tank (15) for a fluid to be heated and a control unit for controlling a heating operation of said fluid, **characterized in that** said heating system further comprises a heating arrangement (100) according to any of the claims 1- 11, said heating arrangement (100) being arranged to be controlled by said control unit for heating said fluid.

## Patentansprüche

1. Heizeinrichtung zum Erwärmen eines Fluids, die eine erste Wärmetauscherschleife (5) zum Aufnehmen von Wärme aus der Umgebungsluft umfasst, wobei die erste Wärmetauscherschleife (5) dafür ausgelegt ist, auf das zu erwärmende Fluid einzuwirken, und eine zweite Wärmetauscherschleife (8),
die dafür ausgelegt ist, ebenfalls auf das zu erwärmende Fluid einzuwirken, wobei die zweite Wärmetauscherschleife (8) Rohrleitungen (8A, 8B) umfasst, die einen wärmeabsorbierenden Bereich (8A) und einen wärmeliefernden Bereich (8B) aufweisen, wobei der wärmeabsorbierende Bereich (8A) mit einer Platte (4) verbunden ist, die als Solarkollektor dient und dafür ausgelegt ist, den wärmeabsorbierenden Bereich (8A) zu erwärmen, **dadurch gekennzeichnet, dass** die Platte (4) so angeordnet ist, dass sie die zweite Wärmetauscherschleife (8) durch Erwärmen und Verdampfen eines Kühlmittels im wärmeabsorbierenden Bereich (8A) antreibt.

2. Heizeinrichtung nach Anspruch 1, wobei die Platte (4) in der Nähe eines Lufteinlasses (7E) angeordnet ist, um als Feuchtigkeitsfalle für Luftfeuchtigkeit zu dienen.

3. Heizeinrichtung nach Anspruch 1 oder 2, wobei die Platte (4) auch mit der ersten Wärmetauscherschleife (5) verbunden und dafür ausgelegt ist, die erste Wärmetauscherschleife (5) zu erwärmen.

4. Heizeinrichtung nach Anspruch 2, die ferner einen Verdampfer (3) umfasst, der mit der ersten Wärmetauscherschleife (5) verbunden ist, wobei der Verdampfer (3) so angeordnet ist, dass mindestens ein Teil der Platte (4) zwischen dem Verdampfer (3) und dem Lufteinlass (7E) platziert ist.

5. Heizeinrichtung nach einem der Ansprüche 1-4, die ferner eine Wärmetauscherleitung (12) umfasst, die so angeordnet ist, dass das zu erwärmende Fluid durch die Leitung (12) fließen kann, wobei die Wärmetauscherleitung (12) ferner mindestens einen Teil der ersten Wärmetauscherschleife (5) und der zweiten Wärmetauscherschleife (8) aufnimmt.

6. Heizeinrichtung nach einem der Ansprüche 1-5, die ferner eine transparente Außenwand (2) umfasst, die so angeordnet ist, dass ein Lufteinlass-Strömungsspalt (7) zwischen der transparenten Außenwand (2) und der Platte (4) gebildet ist.

7. Heizeinrichtung nach Anspruch 2 und 6, wobei der Lufteinlass (7E) sich an einem unteren Ende des Lufteinlass-Strömungsspalts (7) befindet.

8. Heizeinrichtungen nach Anspruch 7, wobei der Lufteinlass-Strömungsspalt (7) ferner dafür ausgelegt ist, als Entfroster dadurch zu wirken, dass er eine Luftmenge, die durch Sonnenlicht erwärmt werden soll, an der Platte (4) hält.

9. Heizeinrichtung nach einem der vorherigen Ansprüche, wobei die Platte (4) ferner dafür ausgelegt ist, als Entfroster dadurch zu wirken, dass Sonnenlicht aufgenommen wird, um Eis zu schmelzen, das sich auf einer Oberfläche der Platte (4) gebildet hat.

10. Heizeinrichtung nach einem der vorherigen Ansprüche, die ferner einen Lüfter (10) zum Umwälzen von Luft in der Heizeinrichtung umfasst.

11. Heizeinrichtung nach einem der vorherigen Ansprüche, die ferner eine Kontrolleinheit umfasst.

12. Heizeinrichtung, die einen Tank (15) für ein Fluid umfasst, das erwärmt werden soll, und eine Kontrolleinheit zum Steuern eines Heizbetriebs des Fluids, **dadurch gekennzeichnet, dass** das Heizsystem ferner eine Heizanordnung (100) nach einem der Ansprüche 1-11 umfasst, wobei die Heizanordnung (100) dafür ausgelegt ist, durch die Kontrolleinheit zum Erwärmen des Fluids gesteuert zu werden.

## Revendications

1. Agencement de chauffage pour chauffer un fluide, comprenant une première boucle d'échangeur de chaleur (5) pour recevoir de la chaleur de l'air ambiant, ladite première boucle d'échangeur de chaleur (5) étant agencée pour agir sur ledit fluide à chauffer, et une deuxième boucle d'échangeur de chaleur (8) agencée pour agir également sur ledit fluide à chauffer, ladite deuxième boucle d'échangeur de chaleur (8) comprenant un tubage (8A, 8B) ayant une partie (8A) absorbant la chaleur et une partie (8B) fournissant de la chaleur, la partie (8A) étant connectée à un panneau (4) qui sert de capteur solaire et qui est agencé pour chauffer ladite partie (8A) absorbant la chaleur, **caractérisé en ce que** ledit panneau (4) est agencé pour faire fonctionner ladite deuxième boucle (8) par chauffage et évaporation d'un réfrigérant à l'intérieur de ladite partie (8A) absorbant la chaleur.

2. Agencement de chauffage selon la revendication 1, dans lequel ledit panneau (4) est agencé à proximité d'une entrée d'air (7E) pour servir de piège à humidité pour l'humidité de l'air.

3. Agencement de chauffage selon la revendication 1 ou la revendication 2, dans lequel ledit panneau (4) est également relié à ladite première boucle d'échangeur de chaleur (5) et agencé pour chauffer ladite première boucle d'échangeur de chaleur (5).

4. Agencement de chauffage selon la revendication 2, comprenant en outre un évaporateur (3) relié à ladite première boucle d'échangeur de chaleur (5), ledit évaporateur (3) étant agencé de manière qu'au moins une partie dudit panneau (4) soit placée entre ledit évaporateur (3) et ladite entrée d'air (7E).

5. Agencement de chauffage selon l'une quelconque des revendications 1 à 4, comprenant en outre un tubage (12) échangeur de chaleur agencé de sorte que ledit fluide à chauffer puisse s'écouler à travers ledit tubage (12), ledit tubage (12) échangeur de chaleur logeant en outre au moins une partie de ladite première boucle d'échangeur de chaleur (5) et de ladite deuxième boucle d'échangeur de chaleur (8).

6. Agencement de chauffage selon l'une quelconque des revendications 1 à 5, comprenant en outre une paroi extérieure transparente (2) agencée de sorte qu'un interstice d'écoulement d'entrée d'air (7) soit formé entre ladite paroi extérieure transparente (2) et ledit panneau (4).

7. Agencement de chauffage selon les revendications 2 et 6, dans lequel ladite entrée d'air (7E) est située à une extrémité inférieure dudit interstice d'écoulement d'entrée d'air (7).

8. Agencement de chauffage selon la revendication 7, dans lequel ledit interstice d'écoulement d'entrée d'air (7) est en outre agencé pour agir en tant que dégivreur en maintenant contre ledit panneau (4) une quantité d'air destinée à être chauffée par la lumière solaire.

9. Agencement de chauffage selon l'une quelconque des revendications précédentes, dans lequel ledit panneau (4) est en outre agencé pour agir en tant que dégivreur en recevant la lumière du soleil pour faire fondre toute glace formée sur une surface dudit panneau (4).

10. Agencement de chauffage selon l'une quelconque des revendications précédentes, comprenant en outre un ventilateur (10) pour faire circuler de l'air dans ledit agencement de chauffage.

11. Agencement de chauffage selon l'une quelconque des revendications précédentes, comprenant en outre une unité de commande.

12. Système de chauffage comprenant un réservoir (15) pour un fluide destiné à être chauffé et une unité de commande pour commander une opération de chauffage dudit fluide, **caractérisé en ce que** ledit système de chauffage comprend en outre un dispositif de chauffage (100) selon l'une quelconque des revendications 1 à 11, ledit agencement de chauffage (100) étant agencé pour être commandé par ladite unité de commande pour chauffer ledit fluide.
